# EUROPEAN PATENT APPLICATION

(11) **EP 4 617 624 A2**
(43) Date of publication of application: **17.09.2025**
(21) Application number: 25162557.0
(22) Date of filing: 10.03.2025
(51) Int. Cl.: G01C 19/5783, G01P 1/02, G01C 19/5769

(54) **INERTIAL SENSOR AND VEHICLE**

(30) Priority: 11.03.2024 JP 2024037036
(71) Applicant: Seiko Epson Corporation, Tokyo 160-8801 (JP)
(72) Inventor: SAKAIDE, Takeru, 392-8502 Suwa-shi (JP)
(74) Representative: Lewis Silkin LLP

(57) **Abstract**

An inertial sensor includes a package having a housing space, a sensor unit disposed in the housing space and including a first acceleration sensor element and a first angular velocity sensor element, a second angular velocity sensor element disposed in the housing space in an exposed state and having a same angular velocity detection axis as that of the first angular velocity sensor element, and a circuit element disposed in the housing space and electrically coupled to the sensor unit and the second angular velocity sensor element.

## Description

The present application is based on, and claims priority from JP Application Serial Number 2024-037036, filed March 11, 2024, the disclosure of which is hereby incorporated by reference herein in its entirety.

### BACKGROUND

### 1. Technical Field

The present disclosure relates to an inertial sensor and a vehicle.

### 2. Related Art

An inertial sensor module disclosed in JP-A-2023-050622 includes a base substrate, a first sensor, a second sensor, and a third sensor mounted on the base substrate, and a lid covering the base substrate so as to cover the first sensor, the second sensor, and the third sensor. The first sensor is a three-axis angular velocity sensor including a first gyro sensor element that detects an angular velocity around an X-axis, a second gyro sensor element that detects an angular velocity around a Y-axis, and a third gyro sensor element that detects an angular velocity around a Z-axis. The third sensor is a three-axis acceleration sensor including a first acceleration sensor element that detects an acceleration in an X-axis direction, a second acceleration sensor element that detects an acceleration in a Y-axis direction, and a third acceleration sensor element that detects an acceleration in a Z-axis direction. The second sensor includes a vibrating gyro sensor element that detects the angular velocity around the Z-axis, and can detect the angular velocity around the Z-axis with higher accuracy than the above described third gyro sensor element.

JP-A-2023-050622 is an example of the related art.

In order to increase the angular velocity detection accuracy of the vibrating gyro sensor element, it is effective to increase the size of the vibrating gyro sensor element. However, in the inertial sensor module in JP-A-2023-050622, the vibrating gyro sensor element is housed in a package. Therefore, it is necessary to reduce the size of the vibrating gyro sensor element by the size of the package, and it is difficult to further increase the angular velocity detection accuracy of the vibrating gyro sensor element.

### SUMMARY

An inertial sensor according to an aspect of the present disclosure includes a package having a housing space, a sensor unit disposed in the housing space and including a first acceleration sensor element and a first angular velocity sensor element, a second angular velocity sensor element disposed in the housing space in an exposed state and having a same angular velocity detection axis as that of the first angular velocity sensor element, and a circuit element disposed in the housing space and electrically coupled to the sensor unit and the second angular velocity sensor element.

A vehicle according to an aspect of the present disclosure includes the above described inertial sensor, wherein the angular velocity detection axis is along a yaw axis.

### BRIEF DESCRIPTION OF THE DRAWINGS

FIG. 1 is a top view showing the inside of an inertial sensor according to a first embodiment.
FIG. 2 is a cross-sectional view of the inertial sensor as seen from a negative side in a Y-axis direction.
FIG. 3 is a cross-sectional view of the inertial sensor before sealing as seen from the negative side in the Y-axis direction.
FIG. 4 is a top view showing the inside of a sensor unit.
FIG. 5 is a cross-sectional view of the sensor unit as seen from the negative side in the Y-axis direction.
FIG. 6 is a cross-sectional view of a three-axis angular velocity sensor as seen from a negative side in an X-axis direction.
FIG. 7 is a cross-sectional view of a three-axis acceleration sensor as seen from the negative side in the X-axis direction.
FIG. 8 is a top view of an angular velocity sensor element.
FIG. 9 is a schematic diagram showing a driving state of an angular velocity sensor.
FIG. 10 is a schematic diagram showing a driving state of the angular velocity sensor.
FIG. 11 is a top view showing sizes of the angular velocity sensor element, the sensor unit, and a circuit element.
FIG. 12 is a block diagram showing functions of the circuit element.
FIG. 13 is a cross-sectional view showing a modification of the inertial sensor shown in FIG. 1.
FIG. 14 is a cross-sectional view showing a modification of the inertial sensor shown in FIG. 1.
FIG. 15 is a cross-sectional view showing a modification of the inertial sensor shown in FIG. 1.
FIG. 16 is a cross-sectional view showing a modification of the inertial sensor shown in FIG. 1.
FIG. 17 is a cross-sectional view showing a modification of the inertial sensor shown in FIG. 1.
FIG. 18 is a cross-sectional view showing a modification of the inertial sensor shown in FIG. 1.
FIG. 19 is a schematic diagram showing a vehicle according to a second embodiment.

### DESCRIPTION OF EMBODIMENTS

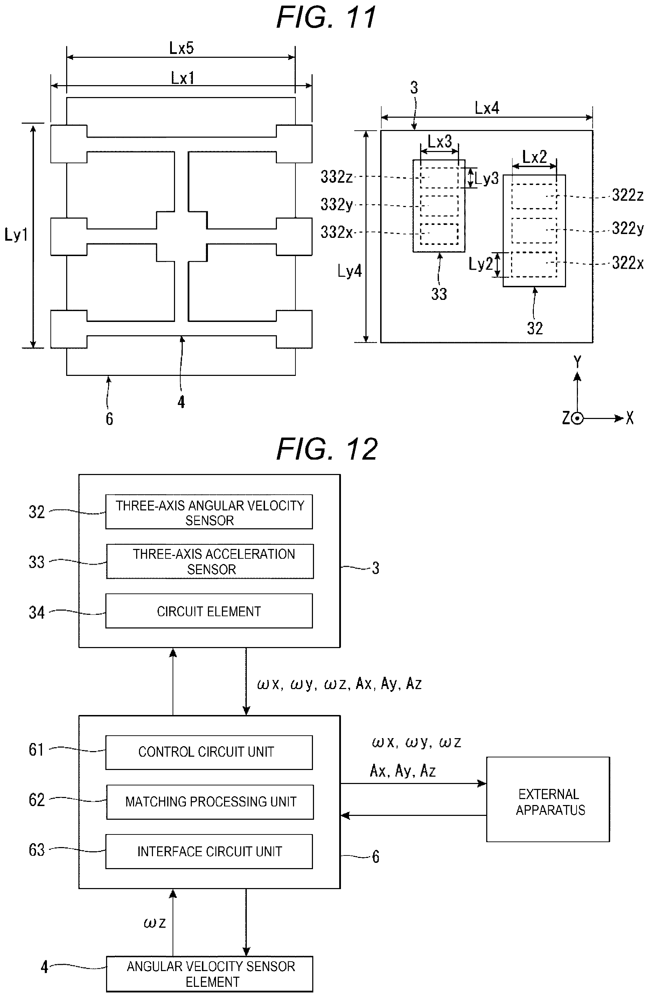

As below, an inertial sensor and a vehicle according to the present disclosure will be described in detail based on embodiments shown in the accompanying drawings. Note that, for convenience of explanation, three axes orthogonal to one another are shown as an X-axis, a Y-axis, and a Z-axis in the respective drawings except FIG. 12. Hereinafter, for convenience of explanation, a direction as a first axis direction parallel to the X-axis is also referred to as "X-axis direction", a direction as a second axis direction parallel to the Y-axis is also referred to as "Y-axis direction", and a direction parallel to the Z-axis is also referred to as "Z-axis direction". Further, the arrow side in the Z-axis direction is also referred to as "upper", and the opposite side is also referred to as "lower".

### First Embodiment

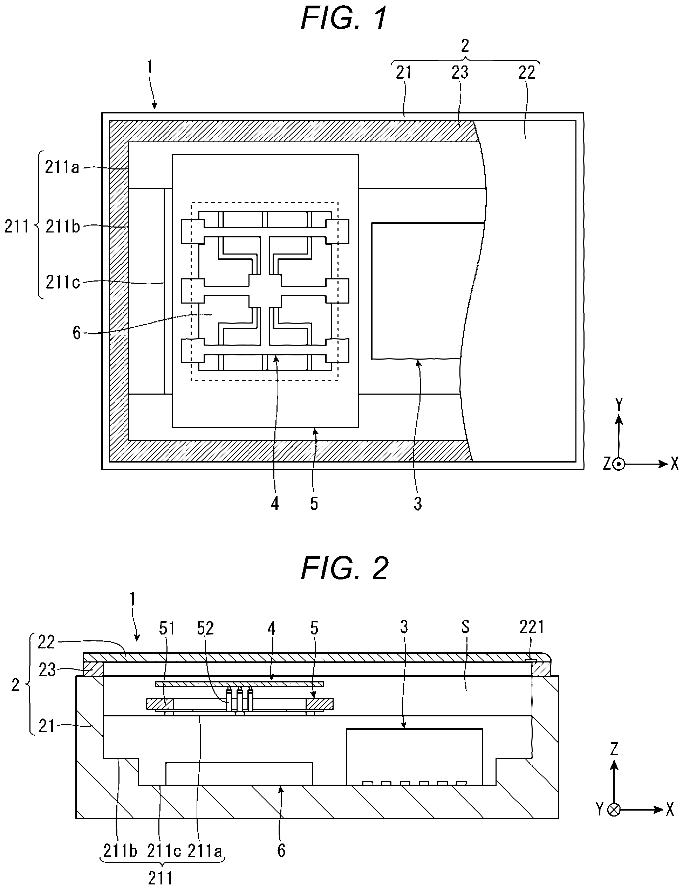

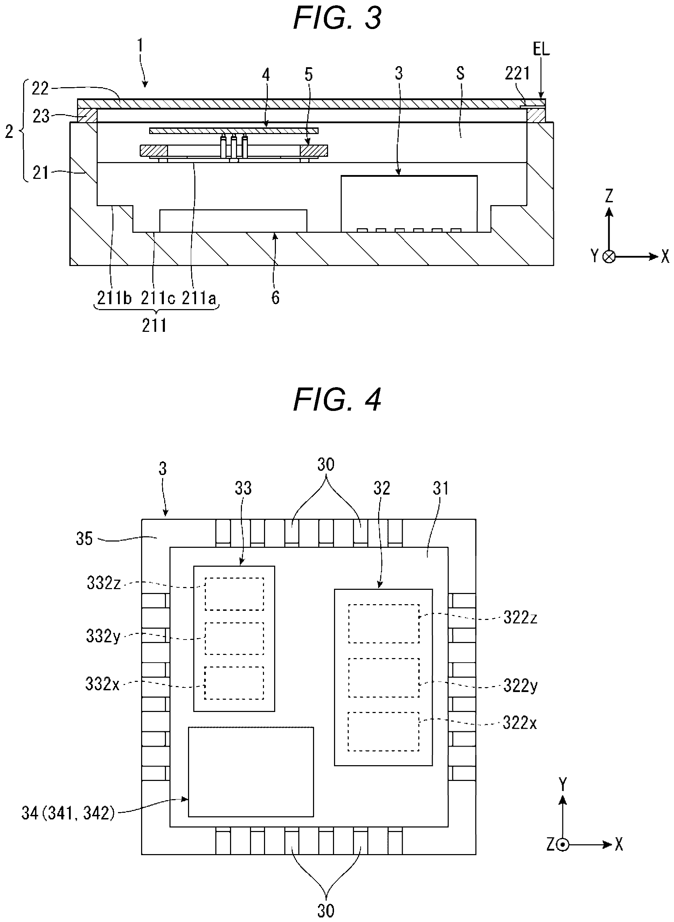

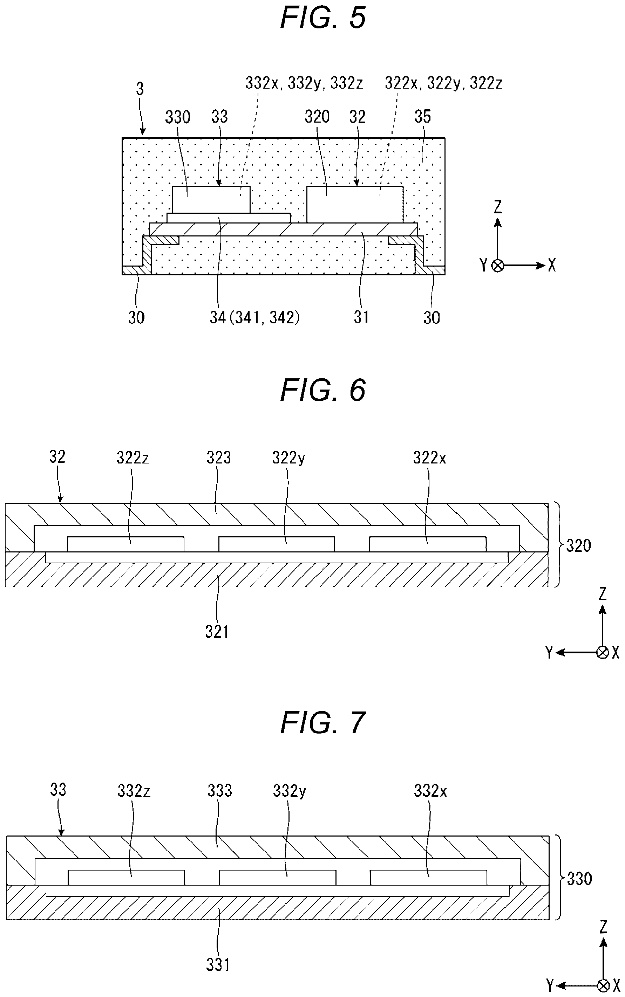

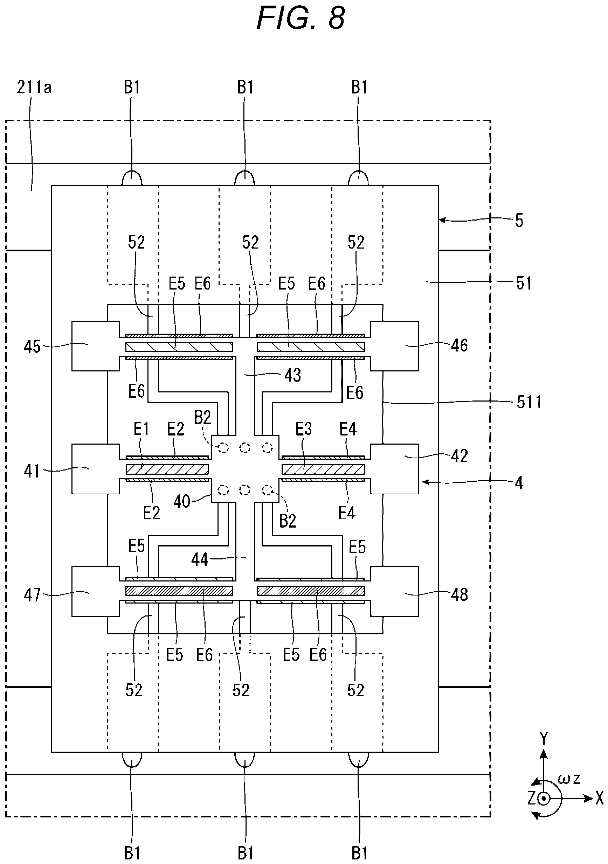

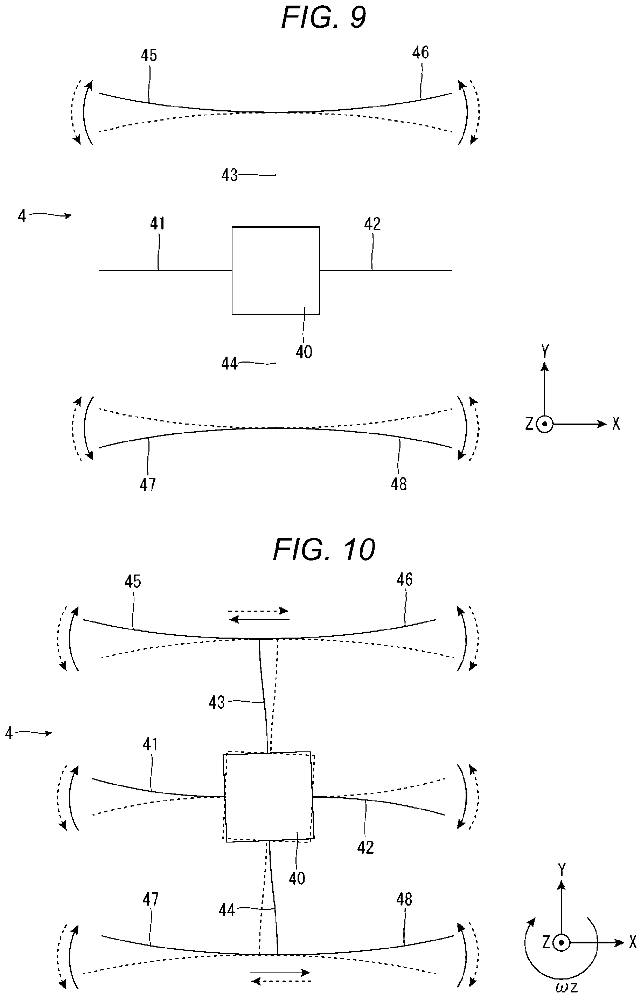

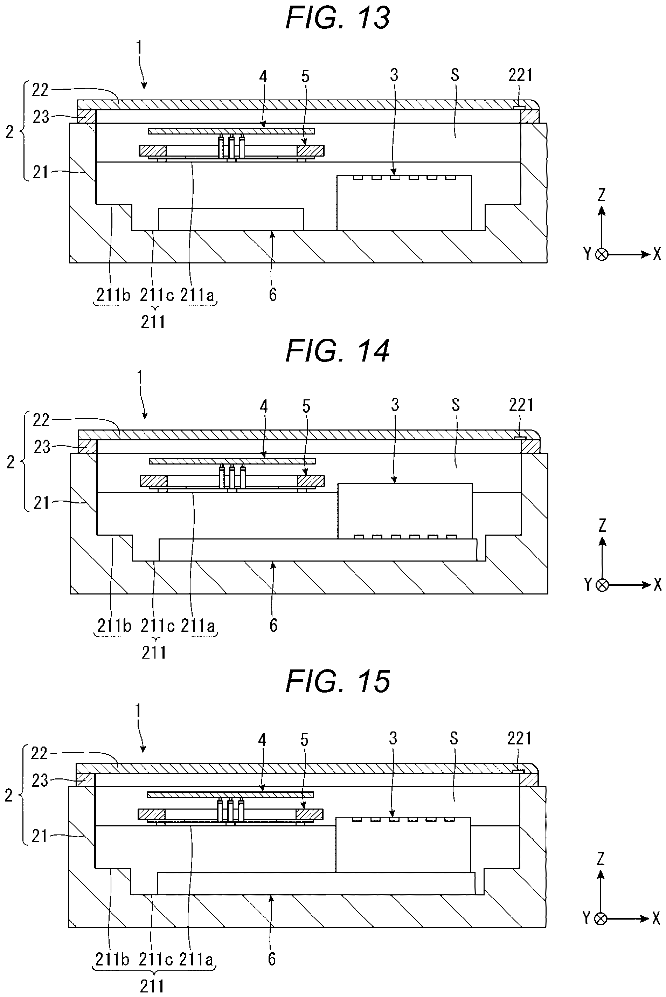

FIG. 1 is a top view showing the inside of an inertial sensor according to the first embodiment. FIG. 2 is a cross-sectional view of the inertial sensor as seen from a negative side in the Y-axis direction. FIG. 3 is a cross-sectional view of the inertial sensor before sealing as seen from the negative side in the Y-axis direction. FIG. 4 is a top view showing the inside of a sensor unit. FIG. 5 is a cross-sectional view of the sensor unit as seen from the negative side in the Y-axis direction. FIG. 6 is a cross-sectional view of a three-axis angular velocity sensor as seen from a negative side in the X-axis direction. FIG. 7 is a cross-sectional view of a three-axis acceleration sensor as seen from the negative side in the X-axis direction. FIG. 8 is a top view of an angular velocity sensor element. FIGS. 9 and 10 are respectively schematic diagrams showing driving states of an angular velocity sensor. FIG. 11 is a top view showing sizes of the angular velocity sensor element, the sensor unit, and a circuit element. FIG. 12 is a block diagram showing functions of the circuit element. FIGS. 13 to 18 are respectively cross-sectional views showing modifications of the inertial sensor shown in FIG. 1.

An inertial sensor 1 shown in FIGS. 1 and 2 includes a package 2, a sensor unit 3 housed in the package 2, an angular velocity sensor element 4 as a second angular velocity sensor element, a support substrate 5, and a circuit element 6.

### Package 2

First, the package 2 will be described. As shown in FIGS. 1 and 2, the package 2 includes a cavity-like base 21 having a recess 211 opened in an upper surface thereof, and a plate-like lid 22 bonded to the upper surface of the base 21 via a seam ring 23 and closing the opening of the recess 211. The recess 211 is closed by the lid 22, and thereby, an airtight housing space S is formed in the package 2, and the sensor unit 3, the angular velocity sensor element 4, the support substrate 5, and the circuit element 6 are housed in the housing space S. The housing space S is hermetically sealed in a reduced pressure state, and preferably in a state closer to vacuum. As a result, the viscous resistance in the housing space S is reduced, and the vibration characteristics of the angular velocity sensor element 4 exposed in the housing space S are improved. Note that an atmosphere in the housing space S is not particularly limited.

As shown in FIG. 3, a groove 221 is formed in the back surface of the lid 22 before hermetical sealing. The groove 221 is provided on the outer edge of the lid 22 at the positive side in the X-axis direction, and the groove width in the Y-axis direction is smaller than the dimension of the housing space S in the Y-axis direction. The groove 221 extends over the housing space S and the seam ring 23 in a plan view, and even after the lid 22 and the seam ring 23 are seam-welded, the portion of the groove 221 is unwelded. Thereby, the inside and the outside of the housing space S communicate with each other via the groove 221. After the housing space S is evacuated through the groove 221, the vicinity of the groove 221 of the lid 22 is irradiated with an energy beam EL such as a laser beam to be melted, and thereby, the groove 221 is closed. Thus, the housing space S is hermetically sealed. However, the method of hermetically sealing the housing space S is not particularly limited.

The groove 221 is preferably separated from the angular velocity sensor element 4. Accordingly, deterioration of the vibration characteristics of the angular velocity sensor element 4 due to adhesion of the splashes of the lid 22 scattered in the housing space S at the time of the irradiation of the energy beam EL to the angular velocity sensor element 4 is effectively suppressed. In the embodiment, since the angular velocity sensor element 4 is disposed closer to the negative side in the X-axis direction in the housing space S, the groove 221 is formed in the end at the positive side in the X-axis direction, that is, the end at the opposite side to the angular velocity sensor element 4.

A constituent material of the base 21 is not particularly limited, but, for example, various ceramics such as aluminum oxide can be used. A constituent material of the lid 22 is not particularly limited, but may be a member having a linear expansion coefficient similar to that of the constituent material of the base 21. For example, when the constituent material of the base 21 is ceramics, the lid is preferably formed using an alloy such as Kovar.

As shown in FIGS. 1 and 2, the recess 211 includes a first recess 211a that opens in the upper surface of the base 21, a second recess 211b that opens in the bottom surface of the first recess 211a and has an opening area smaller than that of the first recess 211a, and a third recess 211c that opens in the bottom surface of the second recess 211b and has an opening area smaller than that of the second recess 211b. The angular velocity sensor element 4 is mounted at the bottom surface of the first recess 211a via the support substrate 5, and the sensor unit 3 and the circuit element 6 are mounted side by side in the X-axis direction on the bottom surface of the third recess 211c. The sensor unit 3 and the angular velocity sensor element 4 are electrically coupled to the circuit element 6 via terminals and internal wiring (not shown) formed on the base 21.

### Sensor Unit 3

Next, the sensor unit 3 will be described. The sensor unit 3 is a composite sensor unit that detects three-axis angular velocities and three-axis accelerations, and is mounted on the bottom surface of the third recess 211c as shown in FIGS. 1 and 2.

As shown in FIGS. 4 and 5, the sensor unit 3 includes a substrate 31 to which leads 30 are attached, a three-axis angular velocity sensor 32, a three-axis acceleration sensor 33, and a circuit element 34 mounted on the upper surface of the substrate 31, and a mold member 35 that molds the three-axis angular velocity sensor 32, the three-axis acceleration sensor 33, and the circuit element 34 with the tip end portions of the leads 30 exposed as terminals. Hereinafter, the surface on which the terminal is exposed is also referred to as "terminal surface".

However, the configuration of the sensor unit 3 is not particularly limited. For example, instead of the mold structure in which the three-axis angular velocity sensor 32, the three-axis acceleration sensor 33, and the circuit element 34 are sealed by the mold member 35, a package structure in which the sensors and the element are housed in a ceramic package or the like may be employed.

### Three-axis Angular Velocity Sensor 32

The three-axis angular velocity sensor 32 can detect an angular velocity ωx around the X-axis, an angular velocity ωy around the Y-axis, and an angular velocity ωz around the Z-axis. The three-axis angular velocity sensor 32 is a silicon MEMS (Micro Electro Mechanical Systems). Therefore, the three-axis angular velocity sensor 32 can be downsized.

As shown in FIG. 6, the three-axis angular velocity sensor 32 includes a package 320, and an X-axis angular velocity sensor element 322x, a Y-axis angular velocity sensor element 322y, and a Z-axis angular velocity sensor element 322z as first angular velocity sensor elements housed in the package 320. Further, the package 320 includes a base 321 having a recess on the upper surface thereof, in which the respective sensor elements 322x, 322y, and 322z are disposed so as to overlap with the recess, and a lid 323 bonded to the upper surface of the base 321 and housing the respective sensor elements 322x, 322y, and 322z between the base 321 and itself.

For example, the three-axis angular velocity sensor 32 can be formed by forming the base 321 from one silicon layer (handle layer) of an SOI (silicon on insulator) substrate and forming the sensor elements 322x, 322y, and 322z from the other silicon layer (device layer), and bonding the lid 323 formed from a silicon substrate to the base 321. According to the configuration, the three-axis angular velocity sensor 32 can be manufactured by a manufacturing process conforming to a silicon semiconductor process.

As below, the X-axis angular velocity sensor element 322x, the Y-axis angular velocity sensor element 322y, and the Z-axis angular velocity sensor element 322z will be briefly described.

The X-axis angular velocity sensor element 322x includes a fixed inter digital transducer fixed to the base 321, a movable inter digital transducer disposed so as to mesh with the fixed inter digital transducer and displaceable in two directions of the Y-axis direction and the Z-axis direction with respect to the base 321, and a driving inter digital transducer for vibrating the movable inter digital transducer in the Y-axis direction. When the angular velocity ωx around the X-axis is applied to the X-axis angular velocity sensor element 322x in a state (drive vibration state) in which the movable inter digital transducer is vibrated in the Y-axis direction by energization of the driving inter digital transducer, a detection vibration in the Z-axis direction is excited in the movable inter digital transducer by the Coriolis force, and the electrostatic capacitance between the fixed inter digital transducer and the movable inter digital transducer is changed according to the detection vibration. Therefore, the change of the electrostatic capacitance can be extracted as an output signal and the angular velocity ωx can be detected based on the output signal. However, the configuration of the X-axis angular velocity sensor element 322x is not particularly limited as long as the angular velocity ωx can be detected.

The Y-axis angular velocity sensor element 322y includes a fixed inter digital transducer fixed to the base 321, a movable inter digital transducer disposed so as to mesh with the fixed inter digital transducer and displaceable in two directions of the X-axis direction and the Z-axis direction with respect to the base 321, and a driving inter digital transducer for vibrating the movable inter digital transducer in the X-axis direction. When the angular velocity ωy around the Y-axis is applied to the Y-axis angular velocity sensor element 322y in a state (drive vibration state) in which the movable inter digital transducer is vibrated in the X-axis direction by the energization of the driving inter digital transducer, a detection vibration in the Z-axis direction is excited in the movable inter digital transducer by the Coriolis force, and the electrostatic capacitance between the fixed inter digital transducer and the movable inter digital transducer is changed according to the detection vibration. Therefore, the change of the electrostatic capacitance can be extracted as an output signal, and the angular velocity ωy can be detected based on the output signal. However, the configuration of the Y-axis angular velocity sensor element 322y is not particularly limited as long as the angular velocity ωy can be detected.

The Z-axis angular velocity sensor element 322z includes a fixed inter digital transducer fixed to the base 321, a movable inter digital transducer disposed so as to mesh with the fixed inter digital transducer and displaceable in two directions of the X-axis direction and the Y-axis direction with respect to the base 321, and a driving inter digital transducer for vibrating the movable inter digital transducer in the X-axis direction. When the angular velocity ωz around the Z-axis is applied to the Z-axis angular velocity sensor element 322z in a state (drive vibration state) in which the movable inter digital transducer is vibrated in the X-axis direction by energization of the driving inter digital transducer, a detection vibration in the Y-axis direction is excited in the movable inter digital transducer by the Coriolis force, and the electrostatic capacitance between the fixed inter digital transducer and the movable inter digital transducer is changed according to the detection vibration. Therefore, the change of the electrostatic capacitance can be extracted as an output signal, and the angular velocity ωz can be detected based on the output signal. However, the configuration of the Z-axis angular velocity sensor element 322z is not particularly limited as long as the angular velocity ωz can be detected.

As above, the three-axis angular velocity sensor 32 is described, however, the configuration of the three-axis angular velocity sensor 32 is not particularly limited. For example, the base 321 and the lid 323 may be formed using a material other than silicon, such as a glass material. In the illustrated configuration, the sensor elements 322x, 322y, and 322z are arranged along the Y-axis direction, however, the arrangement thereof is not particularly limited. Further, the package 320 may be divided for each of the sensor elements 322x, 322y, and 322z. In this case, the sensor elements 322x, 322y, and 322z may be disposed to overlap with one another in the Z-axis direction. Two or more sensor elements selected from the sensor elements 322x, 322y, and 322z may be integrally formed as one sensor element. In other words, two or more of the angular velocities ωx, ωy, and ωz may be detected by one sensor element.

The angular velocity sensor is not limited to the three-axis angular velocity sensor 32 and the number of angular velocity detection axes of the angular velocity sensor may be two or one as long as the angular velocity sensor includes the Z-axis angular velocity sensor element 322z. That is, the angular velocity sensor may be a two-axis angular velocity sensor having an angular velocity detection axis of one of the X-axis and the Y-axis and an angular velocity detection axis of the Z-axis, or may be a single-axis angular velocity sensor having a single axis of the Z-axis.

### Three-Axis Acceleration Sensor 33

The three-axis acceleration sensor 33 can detect an acceleration Ax in the X-axis direction, an acceleration Ay in the Y-axis direction, and an acceleration Az in the Z-axis direction. The three-axis acceleration sensor 33 is a silicon MEMS like the above described three-axis angular velocity sensor 32. Therefore, the triaxial acceleration sensor 33 can be downsized.

As shown in FIG. 7, the three-axis acceleration sensor 33 includes a package 330, and an X-axis acceleration sensor element 332x, a Y-axis acceleration sensor element 332y, and a Z-axis acceleration sensor element 332z as first acceleration sensor elements housed in the package 330. Further, the package 330 includes a base 331 having a recess opened in the upper surface, in which the respective sensor elements 332x, 332y, and 332z are disposed so as to overlap with the recess, and a lid 333 bonded to the upper surface of the base 331 and housing the sensor elements 332x, 332y, and 332z between the base 331 and itself.

For example, the three-axis acceleration sensor 33 can be formed by forming the base 331 from one silicon layer (handle layer) of an SOI substrate and forming the sensor elements 332x, 332y, and 332z from the other silicon layer (device layer), and bonding the lid 333 formed from a silicon substrate to the base 331. According to the configuration, the three-axis acceleration sensor 33 can be manufactured by a manufacturing process conforming to a silicon semiconductor process.

As below, the X-axis acceleration sensor element 332x, the Y-axis acceleration sensor element 332y, and the Z-axis acceleration sensor element 332z will be briefly described.

The X-axis acceleration sensor element 332x includes a fixed inter digital transducer fixed to the base 331 and a movable inter digital transducer disposed so as to mesh with the fixed inter digital transducer and displaceable in the X-axis direction with respect to the base 331. When the acceleration Ax in the X-axis direction is applied to the X-axis acceleration sensor element 332x, the movable inter digital transducer is displaced in the X-axis direction, and the electrostatic capacitance between the fixed inter digital transducer and the movable inter digital transducer is changed according to the displacement. Therefore, the change of the electrostatic capacitance can be extracted as an output signal, and the acceleration Ax can be detected based on the output signal. However, the configuration of the X-axis acceleration sensor element 332x is not particularly limited as long as the acceleration Ax can be detected.

The Y-axis acceleration sensor element 332y includes a fixed inter digital transducer fixed to the base 331 and a movable inter digital transducer disposed so as to mesh with the fixed inter digital transducer and displaceable in the Y-axis direction with respect to the base 331. When the acceleration Ay in the Y-axis direction is applied to the Y-axis acceleration sensor element 332y, the movable inter digital transducer is displaced in the Y-axis direction, and the electrostatic capacitance between the fixed inter digital transducer and the movable inter digital transducer is changed according to the displacement. Therefore, the change of the electrostatic capacitance can be extracted as an output signal, and the acceleration Ay can be detected based on the output signal. However, the configuration of the Y-axis acceleration sensor element 332y is not particularly limited as long as the acceleration Ay can be detected.

The Z-axis acceleration sensor element 332z includes a fixed inter digital transducer fixed to the base 331 and a movable inter digital transducer disposed so as to mesh with the fixed inter digital transducer and displaceable in the Z-axis direction with respect to the base 331. When the acceleration Az in the Z-axis direction is applied to the Z-axis acceleration sensor element 332z, the movable inter digital transducer is displaced in the Z-axis direction, and the electrostatic capacitance between the fixed inter digital transducer and the movable inter digital transducer is changed according to the displacement. Therefore, the change of the electrostatic capacitance can be extracted as an output signal, and the acceleration Az can be detected based on the output signal. However, the configuration of the Z-axis acceleration sensor element 332z is not particularly limited as long as the acceleration Az can be detected.

As above, the three-axis acceleration sensor 33 is described, however, the configuration of the three-axis acceleration sensor 33 is not particularly limited. For example, the base 331 and the lid 333 may be formed using a material other than silicon, such as a glass material. In the illustrated configuration, the sensor elements 332x, 332y, and 332z are arranged along the Y-axis direction, but the arrangement thereof is not particularly limited. Further, the package 330 may be divided for each of the sensor elements 332x, 332y, and 332z. In this case, the sensor elements 332x, 332y, and 332z may be disposed to overlap with one another in the Z-axis direction. Two or more sensor elements selected from the sensor elements 332x, 332y, and 332z may be integrally formed as one sensor element. In other words, two or more of the accelerations Ax, Ay, and Az may be detected by one sensor element. The acceleration sensor is not limited to the three-axis acceleration sensor 33 and the number of acceleration detection axes may be two or one.

### Circuit Element 34

The circuit element 34 is electrically coupled to the three-axis angular velocity sensor 32 and the three-axis acceleration sensor 33 via the substrate 31. The circuit element 34 is, for example, an MCU (Micro Controller Unit), and performs integrated control of the respective portions of the sensor unit 3. As shown in FIGS. 4 and 5, the circuit element 34 includes a control circuit unit 341 that controls driving of the three-axis angular velocity sensor 32 and the three-axis acceleration sensor 33, and an interface circuit unit 342 that communicates with the circuit element 6.

The control circuit unit 341 controls driving of the three-axis angular velocity sensor 32, detects the angular velocity ωx based on the output signal of the X-axis angular velocity sensor element 322x, detects the angular velocity ωy based on the output signal of the Y-axis angular velocity sensor element 322y, and detects the angular velocity ωz based on the output signal of the Z-axis angular velocity sensor element 322z. Further, the control circuit unit 341 controls driving of the three-axis acceleration sensor 33, detects the acceleration Ax based on the output signal of the X-axis acceleration sensor element 332x, detects the acceleration Ay based on the output signal of the Y-axis acceleration sensor element 332y, and detects the acceleration Az based on the output signal of the Z-axis acceleration sensor element 332z.

The interface circuit unit 342 transmits and receives a signal, receives a command from the circuit element 6, and outputs the detected angular velocities ωx, ωy, and ωz and accelerations Ax, Ay, and Az to the circuit element 6. Although the communication method is not particularly limited, SPI (Serial Peripheral Interface) communication is used in the embodiment. The SPI communication is a communication method suitable for connecting a plurality of sensors, and all signals related to the angular velocities ωx, ωy, and ωz and the accelerations Ax, Ay, and Az can be output from a single pin. Therefore, the number of pins of the sensor unit 3 can be reduced.

As above, the sensor unit 3 is described. As shown in FIG. 2, the sensor unit 3 is face-down mounted on the bottom surface of the third recess 211c with the terminal surface facing downward. As described above, since the sensor unit 3 can be coupled to a terminal (not shown) formed on the base 21 without a wire by face-down mounting, the inertial sensor 1 can be downsized.

### Angular Velocity Sensor Element 4

Next, the first angular velocity sensor element 4 will be described. As shown in FIGS. 1 and 2, the angular velocity sensor element 4 is disposed at the upside of the circuit element 6, and overlaps with the circuit element 6 in a plan view from the Z-axis direction. As described above, the angular velocity sensor element 4 and the circuit element 6 are disposed to overlap with each other, and thereby, the planar expansion of the inertial sensor 1 can be suppressed and the inertial sensor 1 can be downsized. Further, since the angular velocity sensor element 4 can be disposed in a wide space above the circuit element 6 and the sensor unit 3, the size of the angular velocity sensor element 4 can be easily increased.

The angular velocity sensor element 4 is a quartz crystal vibrator element and can detect the angular velocity ωz around the Z-axis. That is, the angular velocity detection axis of the angular velocity sensor element 4 is the Z-axis. As shown in FIG. 8, the angular velocity sensor element 4 has a quartz crystal substrate in which a base portion 40 located at the center, a pair of detection vibration arms 41 and 42 extending from the base portion 40 toward both sides in the X-axis direction, a pair of support arms 43 and 44 extending from the base portion 40 toward both sides in the Y-axis direction, a pair of drive vibration arms 45 and 46 extending from a tip end portion of one support arm 43 toward both sides in the X-axis direction, and a pair of drive vibration arms 47 and 48 extending from a tip end portion of the other support arm 44 toward both sides in the X-axis direction are integrally formed. The angular velocity sensor element 4 is supported by the support substrate 5 at the base portion 40.

The angular velocity detection axis of the angular velocity sensor element 4 and the angular velocity detection axis of the Z-axis angular velocity sensor element 322z are both the Z-axis and the same angular velocity detection axis. Here, "the same angular velocity detection axis" refers to a state in which the angular error of the angular velocity detection axis of the Z-axis angular velocity sensor element 322z with respect to the angular velocity detection axis of the angular velocity sensor element 4 is ±5 degrees or less.

Further, the angular velocity sensor element 4 includes first detection signal electrodes E1 disposed on both principal surfaces of the detection vibration arm 41, first detection ground electrodes E2 disposed on both side surfaces of the detection vibration arm 41, second detection signal electrodes E3 disposed on both principal surfaces of the detection vibration arm 42, second detection ground electrodes E4 disposed on both side surfaces of the detection vibration arm 42, drive signal electrodes E5 disposed on both principal surfaces of the drive vibration arms 45 and 46 and both side surfaces of the drive vibration arms 47 and 48, and drive ground electrodes E6 disposed on both side surfaces of the drive vibration arms 45 and 46 and both principal surfaces of the drive vibration arms 47 and 48.

The above described angular velocity sensor element 4 detects the angular velocity ωz in the following manner. When a drive signal is applied to the drive signal electrodes E5, as shown in FIG. 9, the drive vibration arms 45 and 46 and the drive vibration arms 47 and 48 perform flexural vibration in opposite phase in the Y-axis direction (hereinafter, this state is also referred to as "drive vibration mode"). In this state, the vibration of the drive vibration arms 45 and 46 and the vibration of the drive vibration arms 47 and 48 are cancelled out, and the detection vibration arms 41 and 42 do not substantially vibrate. When the angular velocity ωz is applied to the angular velocity sensor element 4 being driven in the drive vibration mode, as shown in FIG. 10, the Coriolis force acts on the drive vibration arms 45, 46, 47, and 48 to excite flexural vibration in the X-axis direction, and in response to the flexural vibration, the detection vibration arms 41 and 42 perform flexural vibration in the Y-axis direction (hereinafter, this state is also referred to as "detection vibration mode").

The electric charge generated in the detection vibration arm 41 in the detection vibration mode is extracted as a first detection signal from the first detection signal electrodes E1, the electric charge generated in the detection vibration arm 42 is extracted as a second detection signal from the second detection signal electrodes E3, and the angular velocity ωz is obtained based on an output signal as a differential signal of the first and second detection signals. Since the angular velocity sensor element 4 is formed using a quartz crystal vibrator, the angular velocity ωz can be detected with higher accuracy than the Z-axis angular velocity sensor element 322z formed using the silicon MEMS. A contributory factor is that the quartz crystal vibrator has better frequency-temperature characteristics than the silicon MEMS.

In particular, in the embodiment, when the bias error of the output signal (output error during rest) of the angular velocity sensor element 4 is Bz1 [deg/sec] and the bias error of the output signal (output error during rest) of the Z-axis angular velocity sensor element 322z is Bz2 [deg/sec], a relationship Bz1 < Bz2 is satisfied. Further, a relationship of Bz1 < 0.5Bz2 is preferably satisfied, and a relationship of Bz1 < 0.3Bz2 is more preferably satisfied. The relationship is satisfied, and thereby, the angular velocity sensor element 4 can detect the angular velocity ωz with higher accuracy than the Z-axis angular velocity sensor element 322z.

In the inertial sensor 1, the angular velocity sensor element 4 is exposed to the housing space S. That is, the angular velocity sensor element 4 is disposed and exposed in the housing space S. Accordingly, in comparison using the packages 2 having the same size, the size of the angular velocity sensor element 4 can be made larger than that of a configuration in which the angular velocity sensor element 4 is housed in the package as in related art. The larger the size of the angular velocity sensor element 4 can be made, the larger the output signal is obtained, the higher the S/N, and the higher the detection accuracy of the angular velocity ωz. Further, the larger the size, the smaller the dimensional error of the quartz crystal vibrator substrate and the more effectively the spurious in the drive vibration state can be suppressed. Accordingly, the bias error of the output signal of the angular velocity sensor element 4 can be further suppressed. Therefore, the angular velocity sensor element 4 can detect the angular velocity ωz with higher accuracy.

In the embodiment, as shown in FIG. 11, when a length of the angular velocity sensor element 4 in the X-axis direction is Lx1 and lengths of the X-axis, Y-axis, Z-axis angular velocity sensor elements 322x, 322y, 322z in the X-axis direction are Lx2, Lx1 > Lx2. When the lengths Lx2 are different among the X-axis, Y-axis, Z-axis angular velocity sensor elements 322x, 322y, 322z, the maximum length is the length Lx2. When lengths of the X-axis, Y-axis, Z-axis acceleration sensor elements 332x, 332y, 332z in the X-axis direction are Lx3, Lx1 > Lx3. When the lengths Lx3 are different among the X-axis, Y-axis, Z-axis acceleration sensor elements 332x, 332y, 332z, the maximum length is the length Lx3. The relationships of Lx1 > Lx2 and Lx1 > Lx3 are satisfied, and thereby, the size of the angular velocity sensor element 4 is sufficiently large. Therefore, the detection accuracy of the angular velocity ωz of the angular velocity sensor element 4 can be made higher. In particular, in the embodiment, when a length of the sensor unit 3 in the X-axis direction is Lx4, Lx1 > Lx4. The above described relationships are satisfied, and thereby, the size of the angular velocity sensor element 4 is larger. Therefore, the detection accuracy of the angular velocity ωz of the angular velocity sensor element 4 can be made even higher.

When a length of the angular velocity sensor element 4 in the Y-axis direction is Ly1 and lengths of the X-axis, Y-axis, Z-axis angular velocity sensor elements 322x, 322y, 322z in the Y-axis direction are Ly2, Ly1 > Ly2. When the lengths Ly2 are different among the X-axis, Y-axis, Z-axis angular velocity sensor elements 322x, 322y, 322z, the maximum length is the length Ly2. When lengths of the X-axis, Y-axis, Z-axis acceleration sensor elements 332x, 332y, 332z in the Y-axis direction are Ly3, Ly1 > Ly3. When the lengths Ly3 are different among the X-axis, Y-axis, Z-axis acceleration sensor elements 332x, 332y, 332z, the maximum length is the length Ly3. The relationships Ly1 > Ly2 and Ly1 > Ly3 are satisfied, and thereby, the size of the angular velocity sensor element 4 is sufficiently large. Therefore, the detection accuracy of the angular velocity ωz of the angular velocity sensor element 4 can be made higher. In particular, in the embodiment, when a length of the sensor unit 3 in the Y-axis direction is Ly4, Ly1 > Ly4. The above described relationships are satisfied, and thereby, the size of the angular velocity sensor element 4 is larger. Therefore, the detection accuracy of the angular velocity ωz of the angular velocity sensor element 4 can be made even higher.

As above, the angular velocity sensor element 4 is described, however, the arrangement and configuration of the angular velocity sensor element 4 are not particularly limited. For example, a silicon MEMS-type angular velocity sensor element may be used as the angular velocity sensor element 4.

### Support Substrate 5

Next, the support substrate 5 will be described. The support substrate 5 has a function of supporting the angular velocity sensor element 4 and electrically coupling the angular velocity sensor element 4 to terminals (not shown) formed on the base 21. As shown in FIG. 8, the support substrate 5 is fixed to the bottom surface of the first recess 211a. The support substrate 5 is located at the downside of the angular velocity sensor element 4 and supports the angular velocity sensor element 4 so as to lift from the downside. As described above, the support substrate 5 intervenes between the base 21 and the angular velocity sensor element 4, and thereby, stress is less likely to be applied to the angular velocity sensor element 4 and the angular velocity detection accuracy of the angular velocity sensor element 4 is increased.

The support substrate 5 is a substrate for TAB (Tape Automated Bonding) mounting and, as shown in FIG. 8, includes a substrate 51 and six leads 52 provided on the substrate 51. The substrate 51 has a frame shape in a plan view from the Z-axis direction, and has an opening 511 inside. The substrate 51 is formed using a film made of an insulating resin such as polyimide. Note that the constituent material of the substrate 51 is not particularly limited, but, for example, may be formed using another insulating resin than polyimide. The substrate 51 has an elongated shape extending in the Y-axis direction, and is fixed to the bottom surface of the first recess 211a at both ends in the Y-axis direction by joining members B1. Further, each lead 52 is electrically coupled to the terminal (not shown) formed on the base 21 via the joining member B1.

The six leads 52 are bonding leads that support the angular velocity sensor element 4 and wiring patterns having conductivity. In the embodiment, each lead 52 is formed using a metal foil such as a copper foil. This facilitates the formation of the leads 52. The three leads 52 of the six leads 52 are disposed at the positive side in the Y-axis direction with respect to the center of the substrate 51, and the tip end portions thereof extend into the opening 511 of the substrate 51. The remaining three leads 52 are disposed at the negative side in the Y-axis direction with respect to the center of the substrate 51, and the tip end portions thereof extend into the opening 511 of the substrate 51.

Each of the leads 52 is bent in the Z-axis direction in the middle and inclined upward, and the tip end portion thereof is located above the substrate 51 through the opening 511. Further, the base portion 40 of the angular velocity sensor element 4 is fixed to the tip end portions of the respective leads 52 via joining members B2. Furthermore, although not illustrated, the respective leads 52 are electrically coupled to the corresponding electrodes E1 to E6 via the bonding members B2.

As above, the support substrate 5 is described, however, the configuration of the support substrate 5 is not particularly limited. For example, the support substrate 5 may be formed by etching of a quartz crystal planar plate to form a frame portion and beam portions extending from the frame portion toward the center of the planar plate, and provision of wiring patterns on the frame portion and the beam portions. In this case, the angular velocity sensor element 4 is fixed near the tip ends of the beam portions of the support substrate 5 via the bonding members B2.

### Circuit Element 6

As shown in FIGS. 1 and 2, the circuit element 6 is mounted on the bottom surface of the third recess 211c side by side with the sensor unit 3. The circuit element 6 is electrically coupled to the sensor unit 3 and the angular velocity sensor element 4 via the base 21. The circuit element 6 is, for example, an MCU (Micro Controller Unit), and performs integrated control of the respective portions of the inertial sensor 1. As shown in FIG. 12, the circuit element 6 includes a control circuit unit 61 that controls driving of the angular velocity sensor element 4, a matching processing unit 62 that corrects an angular error in detection axis between the Z-axis angular velocity sensor element 322z and the angular velocity sensor element 4, and an interface circuit unit 63 that communicates with an external apparatus.

The control circuit 61 controls driving of the angular velocity sensor element 4 and detects the angular velocity ωz based on the output signal of the angular velocity sensor element 4. The matching processing unit 62 corrects the output signal of the angular velocity sensor element 4 based on the angular error of the detection axis of the angular velocity sensor element 4 with respect to the detection axis of the Z-axis angular velocity sensor element 322z. That is, the unit performs alignment correction on the output signal of the angular velocity sensor element 4 so that the detection axis of the angular velocity sensor element 4 is aligned with the detection axis of the Z-axis angular velocity sensor element 322z. Accordingly, the angular velocity sensor element 4 can detect the angular velocity around the axis aligned with the detection axis of the Z-axis angular velocity sensor element 322z.

The interface circuit unit 63 transmits and receives a signal, receives a command from an external apparatus, and outputs the angular velocities ωx, ωy, and ωz and the accelerations Ax, Ay, and Az detected by the sensor unit 3 and the angular velocity ωz detected by the angular velocity sensor element 4 to the external apparatus. Although the communication method is not particularly limited, SPI (Serial Peripheral Interface) communication is used in the embodiment. The SPI communication is a communication method suitable for connecting a plurality of sensors, and all signals related to the angular velocities ωx, ωy, and ωz and the accelerations Ax, Ay, and Az can be output from a single pin. Therefore, the number of pins of the inertial sensor 1 can be reduced.

In the inertial sensor 1, the angular velocity ωz is detected by each of the Z-axis angular velocity sensor element 322z and the angular velocity sensor element 4. As described above, the angular velocity sensor element 4 has higher detection accuracy of the angular velocity ωz than the Z-axis angular velocity sensor element 322z. Accordingly, the interface circuit unit 63 may collectively output a total of six signals of the angular velocities ωx and ωy and the accelerations Ax, Ay, and Az detected by the sensor unit 3 and the angular velocity ωz detected by the angular velocity sensor element 4 to the external apparatus without outputting the angular velocity ωz detected by the Z-axis angular velocity sensor element 322z to the external apparatus. Alternatively, the interface circuit unit 63 may collectively output a total of seven signals of the angular velocities ωx, ωy, and ωz and the accelerations Ax, Ay, and Az detected by the sensor unit 3 and the angular velocity ωz detected by the angular velocity sensor element 4 to the external apparatus. In this case, a user may determine whether to use the angular velocity ωz detected by the Z-axis angular velocity sensor element 322z, the angular velocity ωz detected by the angular velocity sensor element 4, or both of the angular velocities ωz. In addition, since the inertial sensor 1 has the two sensors of the angular velocity sensor element 4 and the Z-axis angular velocity sensor element 322z as sensors for detecting the angular velocity around the Z-axis, even when one of the two sensors for detecting the angular velocity around the Z-axis fails, the other can detect the angular velocity around the Z-axis. Therefore, robustness of angular velocity detection around the Z-axis can be enhanced.

As above, the inertial sensor 1 is described. As described above, the inertial sensor 1 includes the package 2 having the housing space S, the sensor unit 3 disposed in the housing space S and including the X-axis, Y-axis, and Z-axis acceleration sensor elements 332x, 332y, and 332z as the first acceleration sensor elements and the X-axis, Y-axis, and Z-axis angular velocity sensor elements 322x, 322y, and 322z as the first angular velocity sensor elements, the angular velocity sensor element 4 disposed in the housing space S in an exposed state as the second angular velocity sensor element having the same angular velocity detection axis as the Z-axis angular velocity sensor element 322z, and the circuit element 6 disposed in the housing space S and electrically coupled to the sensor unit 3 and the angular velocity sensor element 4. According to the configuration, since the angular velocity sensor element 4 is exposed to the housing space S, in comparison using the packages 2 having the same size, the size of the angular velocity sensor element 4 can be made larger than that of a configuration in which the angular velocity sensor element 4 is housed in the package as in related art. Therefore, the angular velocity sensor element 4 can detect the angular velocity ωz with higher accuracy.

As described above, the angular velocity sensor element 4 is disposed so as to overlap with at least one of the sensor unit 3 and the circuit element 6 in a plan view from the direction along the Z-axis as the angular velocity detection axis. In the embodiment, the angular velocity sensor element 4 is disposed to overlap with the circuit element 6. According to the configuration, the planar expansion of the inertial sensor 1 can be suppressed, and the inertial sensor 1 can be downsized. Further, since the angular velocity sensor element 4 can be disposed in a wide space above the circuit element 6, the size of the angular velocity sensor element 4 can be easily increased.

As described above, the angular velocity sensor element 4 is supported by the package 2 via the support substrate 5. According to the configuration, stress is less likely to be applied to the angular velocity sensor element 4, and the angular velocity detection accuracy of the angular velocity sensor element 4 is increased.

As described above, when the directions orthogonal to the Z-axis and orthogonal to one another are the X-axis direction as the first axis direction and the Y-axis direction as the second axis direction, the length Lx1 of the angular velocity sensor element 4 in the X-axis direction is larger than the length Lx2 of the X-axis, Y-axis, and Z-axis angular velocity sensor elements 322x, 322y, and 322z in the X-axis direction. According to the configuration, the size of the angular velocity sensor element 4 is sufficiently large. Therefore, the detection accuracy of the angular velocity ωz of the angular velocity sensor element 4 can be further increased.

As described above, the length Ly1 of the angular velocity sensor element 4 in the Y-axis direction is larger than the length Ly2 of the X-axis, Y-axis, and Z-axis angular velocity sensor elements 322x, 322y, and 322z in the Y-axis direction. According to the configuration, the size of the angular velocity sensor element 4 is sufficiently large. Therefore, the detection accuracy of the angular velocity ωz of the angular velocity sensor element 4 can be further increased.

As described above, the length Lx1 of the angular velocity sensor element 4 in the X-axis direction is larger than the length Lx3 of the acceleration sensor elements 332x, 332y, and 332z in the X-axis direction. According to the configuration, the size of the angular velocity sensor element 4 is sufficiently large. Therefore, the detection accuracy of the angular velocity ωz of the angular velocity sensor element 4 can be further increased.

As described above, the Y-axis direction length Ly1 of the angular velocity sensor element 4 is larger than the Y-axis direction length Ly3 of the X-axis, Y-axis, and Z-axis acceleration sensor elements 332x, 332y, and 332z. According to the configuration, the size of the angular velocity sensor element 4 is sufficiently large. Therefore, the detection accuracy of the angular velocity ωz of the angular velocity sensor element 4 can be further increased.

Further, as described above, the housing space S is at reduced pressure. According to the configuration, the viscous resistance in the housing space S is reduced, and the vibration characteristics of the angular velocity sensor element 4 are improved.

As described above, the bias error Bz1 of the output signal of the angular velocity sensor element 4 is smaller than the bias error Bz2 of the output signal of the Z-axis angular velocity sensor element 322z. According to the configuration, the angular velocity sensor element 4 can detect the angular velocity ωz with higher accuracy than the Z-axis angular velocity sensor element 322z.

As described above, the circuit element 6 includes the matching processing unit 62 that corrects the angular error in angular velocity detection axis between the Z-axis angular velocity sensor element 322z and the angular velocity sensor element 4. According to the configuration, the angular velocity sensor element 4 can detect the angular velocity around the axis aligned with the detection axis of the Z-axis angular velocity sensor element 322z.

As described above, the sensor unit 3 includes the X-axis, Y-axis, and Z-axis acceleration sensor elements 332x, 332y, and 332z as the three first acceleration sensor elements arranged with the acceleration detection axes orthogonal to one another, and the X-axis, Y-axis, and Z-axis angular velocity sensor elements 322x, 322y, and 322z as the three first angular velocity sensor elements arranged with the angular velocity detection axes orthogonal to one another. The angular velocity detection axis of the angular velocity sensor element 4 is the same as the angular velocity detection axis of one of the X-axis, Y-axis, and Z-axis angular velocity sensor elements 322x, 322y, and 322z, in the embodiment, the angular velocity detection axis of the Z-axis angular velocity sensor element 322z. According to the configuration, the inertia along the total of six axes can be detected and, especially, the angular velocity around the Z-axis can be detected with particularly high accuracy, and thereby, the inertial sensor 1 with higher convenience is obtained.

As above, the inertial sensor 1 of the embodiment is described. However, the configuration of the inertial sensor 1 is not particularly limited.

For example, as shown in FIG. 13, the sensor unit 3 may be face-up mounted on the bottom surface of the third recess 211c with the terminal surface facing upward. Although not illustrated, in this case, the sensor unit 3 is electrically coupled to terminals disposed on the base 21 via bonding wires.

For example, as shown in FIG. 14, the sensor unit 3 may be face-down mounted on the upper surface of the circuit element 6 with the terminal surface facing downward. According to the configuration, the size of the circuit element 6 can be increased as compared with the embodiment. Therefore, higher performance and multi-functionality of the circuit element 6 can be realized. As shown in FIG. 15, in contrast to the configuration of FIG. 14, the sensor unit 3 may be turned upside down, and face-up mounted on the upper surface of the circuit element 6 with the terminal surface facing upward.

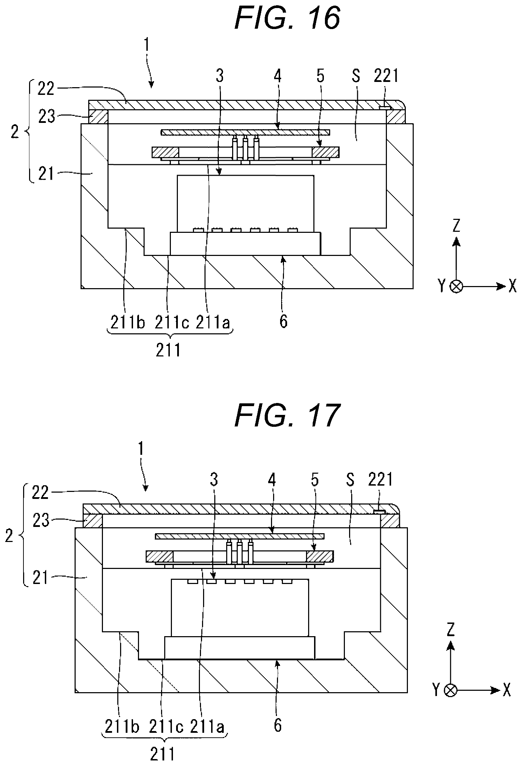

Further, for example, as shown in FIG. 16, the sensor unit 3 may be face-down mounted on the upper surface of the circuit element 6 with the terminal surface facing downward, and the angular velocity sensor element 4 may be disposed at the upside of the sensor unit 3. According to the configuration, the angular velocity sensor element 4, the support substrate 5, the sensor unit 3, and the circuit element 6 can be disposed to overlap with one another, and thereby, the planar expansion of the inertial sensor 1 can be suppressed and the inertial sensor 1 can be downsized compared to the embodiment. As shown in FIG. 17, in contrast to the configuration of FIG. 16, the sensor unit 3 may be turned upside down, and face-up mounted on the upper surface of the circuit element 6 with the terminal surface facing upward.

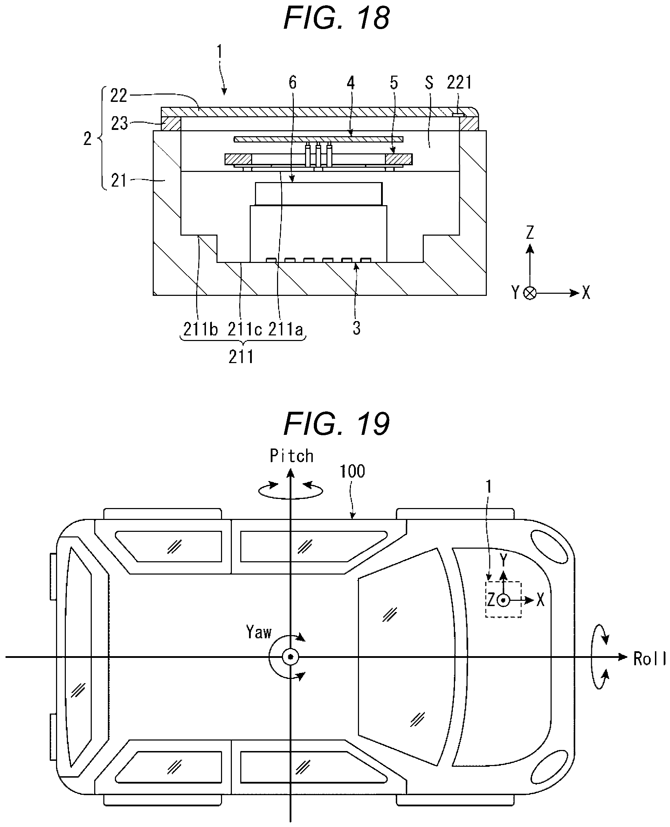

Further, for example, as shown in FIG. 18, the circuit element 6 may be mounted on the upper surface of the sensor unit 3, and the angular velocity sensor element 4 may be disposed at the upside of the circuit element 6. According to the configuration, the angular velocity sensor element 4, the support substrate 5, the sensor unit 3, and the circuit element 6 can be disposed to overlap with one another, and thereby, the planar expansion of the inertial sensor 1 can be suppressed and the inertial sensor 1 can be downsized compared to the embodiment.

### Second Embodiment

FIG. 19 is a schematic diagram showing a vehicle according to a second embodiment.

As shown in FIG. 19, a vehicle 100 of the embodiment is an automobile. However, the vehicle 100 is not limited to the automobile, but may be, for example, a farm machine such as a tractor or a construction machine such as a power shovel.

The inertial sensor 1 is provided in the vehicle 100. Further, the inertial sensor 1 is in an attitude with the X-axis in the front-rear direction of the vehicle 100, the Y-axis in the left-right direction of the vehicle 100, and the Z-axis in the up-down direction of the vehicle 100. Accordingly, the X-axis of the inertial sensor 1 is aligned with a roll (Roll) axis of the vehicle 100, the Y-axis of the inertial sensor 1 is aligned with a pitch (Pitch) axis of the vehicle 100, and the Z-axis of the inertial sensor 1 is aligned with a yaw (Yaw) axis of the vehicle 100. Therefore, the attitude of the vehicle 100 is expressed by a roll angle around the X-axis, a pitch angle around the Y-axis, and a yaw angle around the Z-axis. The roll angle corresponds to the inclination of the vehicle 100 in the left-right direction, the pitch angle corresponds to the inclination of the vehicle 100 in the front-rear direction, and the yaw angle corresponds to the change of the movement direction or the azimuth of the vehicle 100.

Here, for example, in various kinds of control of the vehicle 100 including automated driving, the most important angle among the roll angle, the pitch angle, and the yaw angle is the yaw angle corresponding to the change of the moving direction or the azimuth of the vehicle 100. This is because, while the detection error of the yaw angle (the difference between the actual value and the measured value) directly leads to the traveling direction error of the vehicle 100 (the difference between the actual traveling direction and the measured traveling direction), the errors of the roll angle and the pitch angle does not directly lead to the traveling direction error of the vehicle 100. In order to reduce the traveling direction error of the vehicle 100, a further increase in detection accuracy of the yaw angle is effective. Obviously, a sensor that can detect all of the roll angle, the pitch angle, and the yaw angle with higher accuracy is most desirably used, however, an increase in size and cost of the sensor is caused. In this respect, according to the inertial sensor 1 that can detect the yaw angle with particularly high accuracy by the angular velocity sensor element 4 and can detect the roll angle and the pitch angle with sufficient accuracy by the sensor unit 3, the inertial sensor can effectively contribute to reduction of the traveling direction error of the vehicle 100 with the reduced size and cost of the device. Accordingly, the inertial sensor 1 is extremely compatible with the vehicle 100.

As described above, the vehicle 100 includes the inertial sensor 1, and the Z-axis as the angular velocity detection axis is along the yaw axis. According to the configuration, the traveling direction error of the vehicle 100 can be effectively reduced.

According to the second embodiment, the same effects as those of the above described first embodiment can be exerted.

As above, the inertial sensor and the vehicle according to some aspects of the present disclosure are described based on the illustrated embodiments, however, the present disclosure is not limited thereto, and the configuration of each unit can be replaced with any configuration having the same function. Further, any other configuration may be added to the present disclosure. The respective embodiments and modifications may be combined as appropriate.

## Claims

1. An inertial sensor comprising:
a package having a housing space;
a sensor unit disposed in the housing space and including a first acceleration sensor element and a first angular velocity sensor element;
a second angular velocity sensor element disposed in the housing space in an exposed state and having a same angular velocity detection axis as that of the first angular velocity sensor element; and
a circuit element disposed in the housing space and electrically coupled to the sensor unit and the second angular velocity sensor element.

2. The inertial sensor according to claim 1, wherein
the second angular velocity sensor element is disposed to overlap with at least one of the sensor unit and the circuit element in a plan view from a direction along the angular velocity detection axis.

3. The inertial sensor according to claim 1 or claim 2, wherein
the second angular velocity sensor element is supported by the package via a support substrate.

4. The inertial sensor according to any one of the preceding claim 1 to claim 3, wherein
when directions orthogonal to the angular velocity detection axis and orthogonal to each other are a first axis direction and a second axis direction, a length of the second angular velocity sensor element in the first axis direction is larger than a length of the first angular velocity sensor element in the first axis direction.

5. The inertial sensor according to claim 4, wherein
a length of the second angular velocity sensor element in the second axis direction is larger than a length of the first angular velocity sensor element in the second axis direction.

6. The inertial sensor according to claim 4 or claim 5, wherein
the length of the second angular velocity sensor element in the first axis direction is larger than a length of the first acceleration sensor element in the first axis direction.

7. The inertial sensor according to any one of the preceding claim 4 to claim 6, wherein
a length of the second angular velocity sensor element in the second axis direction is larger than a length of the first acceleration sensor element in the second axis direction.

8. The inertial sensor according to any one of the preceding claim 1 to claim 7, wherein
the housing space is at reduced pressure.

9. The inertial sensor according to any one of the preceding claim 1 to claim 8, wherein
a bias error of an output signal of the second angular velocity sensor element is smaller than a bias error of an output signal of the first angular velocity sensor element.

10. The inertial sensor according to any one of the preceding claim 1 to claim 9, wherein
the circuit element includes a matching processing unit that corrects an angular error of the angular velocity detection axis between the first angular velocity sensor element and the second angular velocity sensor element.

11. The inertial sensor according to any one of the preceding claim 1 to claim 10, wherein
the sensor unit includes three of the first acceleration sensor elements arranged with acceleration detection axes orthogonal to one another, and three of the first angular velocity sensor elements arranged with angular velocity detection axes orthogonal to one another, and
the angular velocity detection axis of the second angular velocity sensor element is a same as the angular velocity detection axis of one of the first angular velocity sensor elements.

12. A vehicle comprising the inertial sensor according to any one of the preceding claim 1 to claim 11, wherein
the angular velocity detection axis is along a yaw axis.
